# EUROPEAN PATENT APPLICATION

(11) **EP 4 524 277 A1**
(43) Date of publication of application: **19.03.2025**
(21) Application number: 23803511.7
(22) Date of filing: 01.05.2023
(51) Int. Cl.: C22C 37/06, F16J 15/34

(54) **FLOATING SEAL MATERIAL AND METHOD FOR PRODUCING SAME**

(30) Priority: 11.05.2022 JP 2022078096
(71) Applicant: Eagle Industry Co., Ltd., Minato-ku Tokyo 105-8587 (JP)
(72) Inventor: OKADO, Jiro, Tokyo 105-8587 (JP); MORISAKI, Takeshi, Tokyo 105-8587 (JP); FUJIWARA, Yasushi, Tokyo 105-8587 (JP)
(74) Representative: TBK
(86) International application number: PCT/JP2023/017067
(87) International publication number: WO 2023/219034

(57) **Abstract**

Provided is a floating seal material containing at least Fe, C, Si, Mn, Cr, and Mo, in which the content of C is 2.3% by weight or more and 3.8% by weight or less, the content of Si is 0.7% by weight or more and 2.5% by weight or less, the content of Mn is 0.3% by weight or more and 1.3% by weight or less, the content of Cr is 3% by weight or more and 13% by weight or less, the content of Mo is 1.8% by weight or more and 15% by weight or less, and the remainder is made up of Fe and unavoidable impurities.

## Description

### TECHNICAL FIELD

The present invention relates to a floating seal material, and a method of producing the same.

### BACKGROUND ART

Floating seal devices are used as seals for track rollers of construction machines, vehicles, and the like to prevent mud, dirt, and the like from entering into the rollers, and to inhibit the leakage of a lubricating oil filling the inside of the rollers to the outside. Such floating seal devices are each composed of a pair of a fixed-side floating seal ring and a rotating-side floating seal ring, and arranged on the outer circumference of a shaft in the state of not contacting the shaft, i.e., in the state of floating from the shaft. The fixed-side and rotating-side floating seal rings have sliding surfaces as opposing surfaces that can slidably contact with each other, and the fixed-side and rotating-side floating seal rings are used in a state of facing each other via the sliding surfaces.

The fixed-side and rotating-side floating seal ring are integrated into a fixed-side mechanism and a rotating-side mechanism via O-rings, respectively, and these floating seal rings are press-contacted via the sliding surfaces by elastic force of the O-rings. Therefore, a seal can be made between the fixed-side mechanism and the rotating-side mechanism regardless of whether the rotating-side mechanism is or is not rotating, so that the intrusion of mud, dirt, and the like into the rollers, as well as the leakage of a lubricating oil to the outside can be inhibited.

Materials constituting such floating seal rings are required to have various properties and, for example, Patent Document 1 discloses: a cast iron material having a high hardness and excellent wear resistance and abrasive resistance, which contains carbon, silicon, manganese, nickel, and chromium as indispensable components, and in which the contents of these elements are controlled in specific ranges; and a floating seal material composed of the cast iron material.

### RELATED ART DOCUMENT

### PATENT DOCUMENT

[Patent Document 1] Japanese Unexamined Patent Application Publication No. 2005-240065

### SUMMARY OF THE INVENTION

### PROBLEMS TO BE SOLVED BY THE INVENTION

As described above, floating seal materials are required to have various properties, and it is desired to develop not only a material that is excellent in the properties required in Patent Document 1, but also a material that exhibits excellent moldability and seizure resistance while maintaining a high hardness. According to the studies conducted by the present inventors, it was found that the Ni (nickel) hard cast iron disclosed in Patent Document 1 causes seizure in a high-load application, and cannot satisfy the above-described properties. Specifically, the Ni hard cast iron of Patent Document 1 exhibits low seizure resistance due to its relatively low chemical stability and low hardness. In addition, the Ni hard cast iron contains a few percent of residual austenite, and this point also leads to low seizure resistance. Further, martensite plastically flows and causes seizure under a relatively high load. It is known to use a high-Cr (chromium) cast iron for the inhibition of seizure; however, since the Ni hard cast iron contains a large amount of Cr, intense oxide generation occurs during atmospheric melting in the production process. As a result, the oxygen content in the resulting molten metal is increased, and this makes casting defects, such as oxide inclusion and pinhole generation in the eventually obtained molded body, more likely to occur, leading to low moldability.

In view of the above, an object of the present invention is to provide: a floating seal material that exhibits excellent moldability and seizure resistance while maintaining a high hardness; and a method of producing the floating seal material.

### MEANS FOR SOLVING THE PROBLEMS

The present inventors intensively studied to solve the above-described problems and consequently discovered that the problems can be solved by adjusting the ratios of elements in a material constituting a floating seal material to be in specific ranges, thereby completing the present invention.

That is, the gist of the present invention is as follows.
[1] A floating seal material, containing at least Fe, C, Si, Mn, Cr, and Mo,
   wherein the content of C is 2.3% by weight or more and 3.8% by weight or less, the content of Si is 0.7% by weight or more and 2.5% by weight or less, the content of Mn is 0.3% by weight or more and 1.3% by weight or less, the content of Cr is 3% by weight or more and 13% by weight or less, the content of Mo is 1.8% by weight or more and 15% by weight or less, and the remainder is made up of Fe and unavoidable impurities.
[2] The floating seal material according to [1], containing at least one of carbides represented by M₃C and M₇C₃ (wherein, M represents Fe, Si, Mn, Cr, or Mo) that are composed of at least a portion of the Fe, Si, Mn, Cr, or Mo, and at least a portion of the C.
[3] The floating seal material according to [1] or [2], containing a carbide represented by M₆C (wherein, M represents Fe, Si, Cr, or Mo) that is composed of at least a portion of the Fe, Si, Cr, or Mo, and at least a portion of the C.
[4] The floating seal material according to [2] or [3], having a phase-separated structure containing at least one dispersed phase in a matrix phase,
   wherein the dispersed phase contains a particulate phase that is formed of at least one of the carbides represented by M₃C, M₇C₃, and M₆C, and has an average particle size of 1 µm or less.
[5] A floating seal device, including the floating seal material according to any one of [1] to [4].
[6] A method of producing a floating seal material, the method including:
   the molten metal preparation step of preparing a molten metal containing at least Fe, C, Si, Mn, Cr, and Mo, in which the content of C is 2.3% by weight or more and 3.8% by weight or less, the content of Si is 0.7% by weight or more and 2.5% by weight or less, the content of Mn is 0.3% by weight or more and 1.3% by weight or less, the content of Cr is 3% by weight or more and 13% by weight or less, the content of Mo is 1.8% by weight or more and 15% by weight or less, and the remainder is made up of Fe and unavoidable impurities; and
   the casting step of casting the molten metal into a die.
[7] The method of producing a floating seal material according to [6], wherein, in the casting step, the molten metal is cast into the die by a centrifugal casting method.
[8] The method of producing a floating seal material according to [6] or [7], including the step of cooling the die to cool and solidify the molten metal after the casting step.

### EFFECTS OF THE INVENTION

According to the present invention, a floating seal material that exhibits excellent moldability and seizure resistance (particularly seizure property under a high load) while maintaining a high hardness, and a method of producing the floating seal material can be provided.

### BRIEF DESCRIPTION OF THE DRAWINGS

[FIG. 1] FIG. 1 is a cross-sectional view of a floating seal device according to one embodiment.
[FIG. 2] FIG. 2 is an electron micrograph showing one example of a structure of a floating seal material (drawing substitute).
[FIG. 3] FIG. 3 is a drawing for describing a structure of a floating seal material.
[FIG. 4] FIG. 4 shows electron micrographs of the floating seal materials according to Examples 1 to 4 (drawing substitutes).
[FIG. 5] FIG. 5 shows electron micrographs of the floating seal materials according to Examples 5 to 7 (drawing substitutes).

### MODE FOR CARRYING OUT THE INVENTION

The present invention will now be described in detail; however, the following descriptions of requirements are merely examples (representative examples) of the embodiments of the present invention, and the present invention is not limited thereto and can be carried out with various modifications within the scope of the gist of present invention.

In the present specification, those numerical ranges that are expressed with "to" each denote a range that includes the numerical values stated before and after "to" as the lower limit value and the upper limit value, respectively, and an expression "A to B" means a value that is A or more but B or less.

Further, in the present specification, plural embodiments are described, and various conditions of each embodiment are applicable to other embodiments to the extent applicable.

### <Configuration of Floating Seal Material>

A floating seal material according to one embodiment of the present invention (hereinafter, also simply referred to as "floating seal material") is a floating seal material, containing at least Fe, C, Si, Mn, Cr, and Mo,
wherein the content of C is 2.3% by weight or more and 3.8% by weight or less, the content of Si is 0.7% by weight or more and 2.5% by weight or less, the content of Mn is 0.3% by weight or more and 1.3% by weight or less, the content of Cr is 3% by weight or more and 13% by weight or less, the content of Mo is 1.8% by weight or more and 15% by weight or less, and the remainder is made up of Fe and unavoidable impurities.

The floating seal material contains C (carbon). By changing the content of C, the amount of a carbide constituting a chill structure can be controlled, and C has an effect of accelerating the dendritic crystallization of crystal grains and adjusting a matrix structure.

The content of C in the floating seal material is not particularly limited as long as it is 2.3% by weight or more and 3.8% by weight or less; however, the content of C is preferably 2.5% by weight or more, more preferably 2.7% by weight or more, still more preferably 2.9% by weight or more, but preferably 3.6% by weight or less, more preferably 3.5% by weight or less, still more preferably 3.4 or less. When the content of C is less than the above-described range, excellent moldability is unlikely to be obtained and, when C exists in the form of crystals of a carbide, the content of the carbide in a fine structure is reduced, and this tends to deteriorate the wear resistance and the matrix machinability. The crystals of the carbide may be, for example, M₃C, M₇C₃, or M₆C, and are preferably formed of at least one of carbides represented by M₃C, M₇C₃, and M₆C (wherein, M is, for example, Fe, Cr, Si, Mn, or Mo). Meanwhile, when the content of C is more than the above-described range, excellent moldability is unlikely to be obtained. In addition, not only carbide cementite in the chill structure is coarsened and cavities are thus likely to be generated in the fine structure by remelting, but also the amount of graphite is increased and the strength of cast iron tends to be reduced.

The floating seal material contains Si (silicon). Si (silicon) has an effect of liberating carbon from pig iron and accelerating the graphitization of cast iron after casting and, at the same time, exhibits an effect of inducing dendritic crystallization or columnar crystallization of crystal grains.

The content of Si in the floating seal material is not particularly limited as long as it is 0.7% by weight or more and 2.5% by weight or less; however, the content of Si is preferably 1.0% by weight or more, more preferably 1.5% by weight or more, still more preferably 1.7% by weight or more, particularly preferably 1.9% by weight or more, but preferably 2.4% by weight or less, more preferably 2.3% by weight or less, still more preferably 2.2% by weight or less. When the content of Si is less than the above-described range, excellent moldability is unlikely to be obtained and, since the curing of the matrix is not accelerated and the matrix itself is refined, the machinability tends to be markedly deteriorated. Meanwhile, when the content of Si is more than the above-described range, not only excellent hardness, moldability, and seizure resistance are unlikely to be obtained, but also the toughness tends to be reduced due to excessive progress of carbon liberation.

The floating seal material contains Mn (manganese). When S (sulfur) is contained as an impurity, Mn unites with S to form manganese sulfide and exhibits an effect of inhibiting an adverse effect caused by incorporation of S into cast iron and an effect of refining the structure and, when Ni is contained, Mn exhibits an effect of inhibiting the graphitization that may be caused by an addition of Ni and thereby improving the matrix.

The content of Mn in the floating seal material is not particularly limited as long as it is 0.3% by weight or more and 1.3% by weight or less; however, the content of Mn is preferably 0.5% by weight or more, more preferably 0.7% by weight or more, still more preferably 0.9% by weight or more, but preferably 1.25% by weight or less, more preferably 1.20% by weight or less, still more preferably 1.15% by weight or less. When the content of Mn is less than the above-described range, excellent hardness, moldability, and seizure resistance are unlikely to be obtained. Meanwhile, when the content of Mn is more than the above-described range, excellent moldability and seizure resistance are unlikely to be obtained and, since the structure is markedly refined, cast iron tends to be embrittled and the machinability tends to be deteriorated.

The floating seal material contains Cr (chromium). Cr forms a fine carbide having high hardness, and exhibits an effect of improving the wear resistance and the matrix strength.

The content of Cr in the floating seal material is not particularly limited as long as it is 3% by weight or more and 13% by weight or less; however, the content of Cr is preferably 6.5% by weight or more, more preferably 7.0% by weight or more, still more preferably 7.5% by weight or more, particularly preferably 8.0% by weight or more, but preferably 9.8% by weight or less, more preferably 9.6% by weight or less, still more preferably 9.4% by weight or less. By controlling the content of Cr to be in this range, the Cr concentration in a main carbide is increased, so that a hard carbide is formed. When the content of Cr is less than the above-described range, excellent hardness and seizure resistance are unlikely to be obtained. Meanwhile, when the content of Cr is more than the above-described range, excellent moldability is unlikely to be obtained. In addition, since intense oxide generation occurs during atmospheric melting and the oxygen content in the resulting molten metal is high, casting defects such as pinhole generation and oxide inclusion tend to occur.

The floating seal material contains Mo (molybdenum). Mo can form a carbide (M₆C) and the like in cast iron, and is solid-solved in the matrix to increase the hardness. Cr also forms a carbide; however, the content of Cr cannot be increased too much since Cr generates an oxide during atmospheric melting and deteriorates the moldability when the content of Cr exceeds 10% by weight. When the content of Cr is 10% by weight or less, the seizure resistance is insufficient and, in order to compensate this, Mo capable of forming M₆C that improves the seizure resistance without deteriorating the moldability is incorporated.

As described above, Mo is solid-solved in the matrix, preferably in a metal part (martensite). When Mo is solid-solved in martensite, the hardness is increased through lattice distortion, which is so-called solid solution strengthening.

The content of Mo in the floating seal material is not particularly limited as long as it is 1.8% by weight or more and 15% by weight or less; however, the content of Mo is preferably 2.0% by weight or more, more preferably 3.0% by weight or more, still more preferably 4.0% by weight or more, particularly preferably 5.0% by weight or more, but preferably 14.95% by weight or less. When the content of Mo is less than the above-described range, excellent hardness, moldability, and seizure resistance are unlikely to be obtained. Further, when the content of Mo is less than the above-described range, since the amount of Mo carbide is reduced, the hardness and the wear resistance are deteriorated. Meanwhile, when the content of Mo is more than the above-described range, the cost is increased and cracking of the floating seal material is likely to occur.

The floating seal material contains Fe. Fe is contained as a main constituent element and constitutes the remainder other than the above-described C, Si, Mn, Cr, and Mo, and those elements excluding C, Si, Mn, Cr, and Mo, which elements can each exist in an amount of 1% by weight or less. Preferably, Fe constitutes the remainder other than C, Si, Mn, Cr, Mo, and unavoidable impurities.

The floating seal material may contain unavoidable impurities. Types of the unavoidable impurities are not particularly limited, and the unavoidable impurities may be elements other than the above-described Fe, C, Si, Mn, Cr, and Mo, and specific optional components, examples of which elements include such as P (phosphorus) and S (sulfur). The lower the content of each unavoidable impurity in the floating seal material, the more preferred it is, and the content of each unavoidable impurity is preferably 0% by weight (less than a detection limit); however, within a range where the effects of the present invention are obtained, the content of each unavoidable impurity may be 0% by weight or more, 0.001% by weight or more, 0.005% by weight or more, or 0.01% by weight or more, but is 1% by weight or less, preferably 0.5% by weight or less, more preferably 0.3% by weight or less, still more preferably 0.1% by weight or less, particularly preferably 0.05% by weight or less, especially preferably 0.02% by weight or less.

Particularly, the content of P is preferably low since P unites with iron to form steadite (Fe₃P), and tends to cause deterioration of the machinability of cast iron and embrittlement of cast iron. Accordingly, the content of P in the floating seal material is preferably 0.5% by weight or less, more preferably 0.3% by weight or less, still more preferably 0% by weight (less than a detection limit); however, it may be 0% by weight or more within a range where the effects of the present invention are obtained.

Further, the content of S is preferably low since S increases the solidification point of cast iron, and tends to cause deterioration of the fluidity of molten metal and embrittlement of cast iron after casting. Accordingly, the content of P in the floating seal material is preferably 0.1% by weight or less, more preferably 0.05% by weight or less, still more preferably 0.02% by weight or less, yet still more preferably 0% by weight (less than a detection limit); however, it may be 0% by weight or more within a range where the effects of the present invention are obtained.

The floating seal material may further contain at least one selected from the group consisting of V and W as an optional component (hereinafter, also referred to as "specific optional component") within a range where the effects of the present invention are obtained. These components may be contained singly, or in combination of two or more kinds thereof; however, they are preferably contained singly. The term "optional component (optional element)" used herein refers to a component (element) that may or may not be contained. The optional component may be contained as an unavoidable impurity, or may be contained as other optional additive component.

From the standpoint of ensuring excellent hardness, moldability, and seizure resistance, the content of each specific optional component in the floating seal material is preferably 1% by weight or less, and it may be 0.9% by weight or less, 0% by weight (less than a detection limit), 0% by weight (less than detection limit) or more, or more than 0% by weight (less than a detection limit).

When the above-described optional components are handled separately from unavoidable impurities and the content of each optional component is indicated to be 1% by weight or less, the floating seal material according to the present embodiment can be described as a floating seal material containing at least Fe, C, Si, Mn, Cr, and Mo, in which the content of C is 2.3% by weight or more and 3.8% by weight or less, the content of Si is 0.7% by weight or more and 2.5% by weight or less, the content of Mn is 0.3% by weight or more and 1.3% by weight or less, the content of Cr is 6% by weight or more and 10% by weight or less, the content of Mo is 1.8% by weight or more and 15% by weight or less, the content of V and that of W are each 1% by weight or less, and the remainder is made up of Fe and unavoidable impurities.

At least a portion of the above-described Fe, Si, Mn, Cr, or Mo may constitute at least one of carbides represented by M₃C and M₇C₃ (wherein, M represents Fe, Si, Mn, Cr, or Mo, particularly Fe or Cr), together with at least a portion of the above-described C.

At least a portion of the above-described Fe, Si, Cr, or Mo may constitute a carbide represented by M₆C (wherein, M represents Fe, Si, Cr, or Mo), together with at least a portion of the above-described C. This carbide, which has a cubic crystal system, is harder and exhibits superior wear resistance and superior thermal conductivity as compared to the above-described carbides represented by M₃C and M₇C₃.

It is noted here that M in the floating seal material may form a M₆C carbide, or may exist in the form of a solid solution in the M₃C or M₇C₃ carbide and/or martensite.

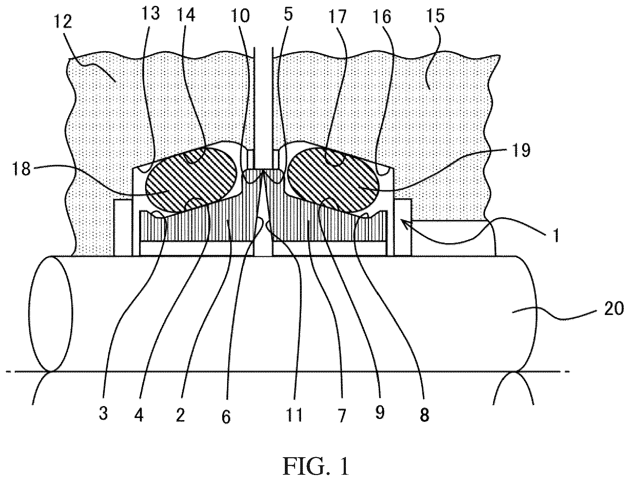

The floating seal material preferably has a phase-separated structure containing at least one dispersed phase in a matrix phase (main phase, metal matrix), and a dispersed material thereof preferably contains a phase formed of at least one of the above-described carbides represented by M₃C, M₇C₃, and M₆C. Further, the dispersed phase is preferably in the form of particles having an average particle size of 1 µm or less. Specifically, for example, when the floating seal material is produced in the form of the floating seal ring described below in the section of <Floating Seal Device>, a fine structure is preferably formed in a dispersed manner on sliding surfaces 5 and 10 (see FIG. 1) each serving as seal surface. From the standpoint of improving the matrix hardness, the fine structure is preferably a structure in which dendritic cementite and a fine carbide mainly composed of Cr are dispersed and a matrix structure is selected from pearlite, bainite, and martensite, or a mixed structure of such structures, more preferably a mixed structure mainly formed of a mixed martensite structure of pearlite, bainite, and martensite, still more preferably a mixed structure of pearlite and martensite that is mainly formed of martensite.

Usually, a metal part (martensite) plastically flows, leading to seizure. However, when a fine carbide is dispersed in martensite, the strength of martensite is increased, so that the seizure resistance is improved.

In the mode of FIG. 1, the formation of the above-described fine structure on the sliding surfaces can be achieved by using the composition of the present embodiment as the component composition constituting cast iron and, particularly, the chill depth of a chill structure forming the fine structure can be stabilized by controlling the amount of Cr to be added.

The average particle size of the dispersed phase can be determined by, for example, observing the floating seal material under an electron microscope, arbitrarily selecting 100 dispersed phase particles, measuring the diameters of the selected particles, and then calculating an average of the thus measured values.

A method of dispersing the carbide represented by M₃C or M₇C₃ and/or the M₆C carbide in a material is not particularly limited, and examples thereof include a method of allowing the carbide(s) to precipitate and form particles by a heat treatment.

The content of each element constituting the floating seal material can be controlled by adjusting the amount of each element in a raw material at the time of producing the floating seal material.

The constituent elements of the floating seal material can be analyzed by emission spectrometry.

Further, the structures of martensite and the like in the floating seal material are determined by structure observation (e.g., structure observation using a scanning electron microscope (SEM)) and hardness measurement.

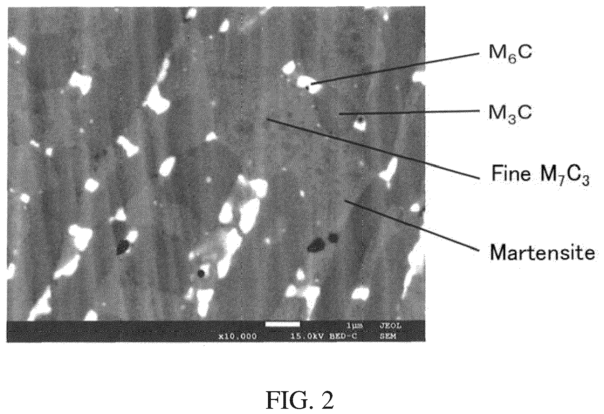

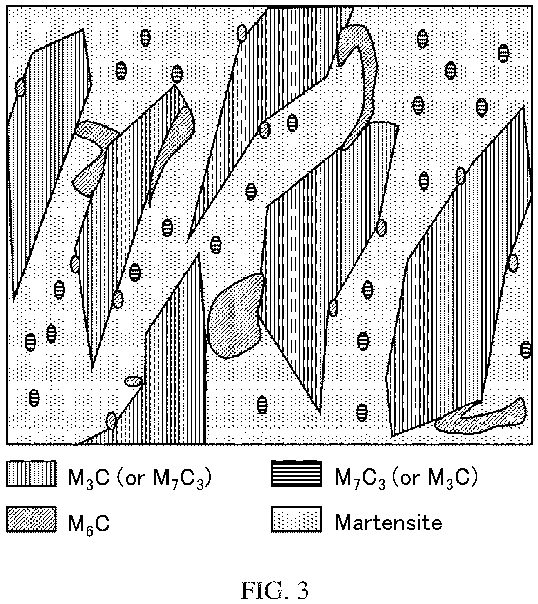

FIG. 2 shows one example of a photograph of the structure of the floating seal material observed under a scanning electron microscope. In the structure of FIG. 2, any one of fine M₃C, M₇C₃, and M₆C is dispersed at an average particle size of 1 µm or less in a main metal matrix phase (martensite). FIG. 3 is a drawing for describing the configuration of each phase in a structure such as the one shown in FIG. 2 (M in FIG. 3 is the same as the above-described M). It is noted here that the structure of FIG. 3 does not correspond to the structure of FIG. 2. FIG. 3 illustrates the presence of a "M₃C (or M₇C₃)" phase and a "M₇C₃ (or M₃C)" phase, indicating that one of these phases is formed of M₃C while the other phase is formed of M₇C₃. In the phases of FIG. 3, the type of M may be the same or different. When fine carbides are dispersed in martensite as illustrated in FIG. 3, the strength of martensite is increased, so that the seizure resistance is improved. It is noted here that FIG. 2 is a photograph of the structure of the floating seal material according to the below-described Example 1 that was observed under a scanning electron microscope.

With regard to the above-described average particle size, when observation objects are not circular, the average particle size may be defined as the average diameter of circles each having the same area (including substantially the same area) as the corresponding observation object.

A shape of the floating seal material is not particularly limited, and any known shape, such as a ring shape applicable as the shape of a known floating seal ring, may be employed. The size of the floating seal material can be changed as appropriate in accordance with the intended purpose. When the floating seal material is in the shape of a ring, the thickness in the innermost diameter part of the ring can also be changed as appropriate in accordance with the intended purpose.

The floating seal material according to the present embodiment may be described as a floating seal material composed of a cast iron material satisfying the above-described conditions of constituent elements. In this case, "floating seal material" may be paraphrased as "cast iron material" in the description relating to the constituent elements.

### <Properties of Floating Seal Material>

### [Hardness]

The hardness of the floating seal material is not particularly limited; however, it is, in terms of Rockwell hardness HRC, usually 64 HRC or more, preferably 65 HRC or more, more preferably 67 HRC or more, still more preferably 68 HRC or more.

The hardness of the floating seal material can be measured using a Rockwell hardness meter.

The above-described material (cast iron material) constituting the floating seal material can be suitably used not only in the floating seal applications, but also in other applications where hardness, moldability, and seizure resistance are required.

### <Method of Producing Floating Seal Material>

A method of producing the above-described floating seal material is not particularly limited, and any known method can be applied.

One example of a method of producing the floating seal material is the method of producing a floating seal material according to another embodiment of the present invention (hereinafter, may be simply referred to as "floating seal material production method"), the method including:
the molten metal preparation step of preparing a molten metal containing at least Fe, C, Si, Mn, Cr, and Mo, in which the content of C is 2.3% by weight or more and 3.8% by weight or less, the content of Si is 0.7% by weight or more and 2.5% by weight or less, the content of Mn is 0.3% by weight or more and 1.3% by weight or less, the content of Cr is 3% by weight or more and 13% by weight or less, the content of Mo is 1.8% by weight or more and 15% by weight or less, and the remainder is made up of Fe and unavoidable impurities; and
the casting step of casting the molten metal into a die.

As the conditions of the content and the like of each component constituting the molten metal, those conditions of the content and the like of each component that are described above for the configuration of the floating seal material, including the specific optional components, can be applied in the same manner.

One example of this production method will now be described in detail.

### [Molten Metal Preparation Step]

The floating seal material production method includes the above-described molten metal preparation step of preparing a molten metal. A method of preparing a molten metal is not particularly limited, and examples thereof include a method of obtaining a molten metal by preparing raw materials such that they contain the above-described elements in the above-described respective content ranges, loading these raw materials into a melting furnace or the like, and then heating the raw materials to a temperature at which the raw materials are melted. A mode of each raw material is not particularly limited, and examples thereof include a coke, a pig iron, and an alloy iron.

A heating temperature is not particularly limited as long as it is a temperature at which the raw materials can be melted.

A heating time is also not particularly limited.

An atmosphere in which the heating is performed is not particularly limited and may be air; however, it is preferably an inert gas, such as argon gas or nitrogen gas.

Further, by using a molten metal having the component composition according to the present embodiment, particularly by using a molten metal containing a smaller amount of Cr than a molten metal used for the production of an ordinary high-Cr casting (about 13% by weight or more), the melting point of the resulting material can be lowered, so that the moldability and the fluidity are improved.

### [Casting Step]

The floating seal material production method includes the casting step of casting the molten metal obtained in the above-described molten metal preparation step into a die. A method of casting the molten metal into a die is not particularly limited and, for example, a centrifugal casting method may be employed.

A method of casting the molten metal into a die (template) by centrifugal casting is not particularly limited, and any known method can be applied. A rotation speed of the centrifugal casting is also not particularly limited.

A mode of the die is not particularly limited. The size of the die can be selected in accordance with the target size of the floating seal material, and any material may be adopted as the material of the die.

In a case where the floating seal material was produced as a floating seal ring, if the inner diameter of the ring had a deposit similar to a molten metal slag component containing large amounts of Si, Cr, and Mn, it can be presumed that the casting was performed by centrifugal casting. In addition, if a carbide in the eventually obtained floating seal material had a small particle size and was dispersed in the entire structure, it can be presumed that the casting was performed by centrifugal casting.

### [Cooling Step]

The floating seal material production method may further include, after the above-described casting step, the cooling step of cooling the die to cool and solidify the molten metal cast in the die. A cooling method is not particularly limited, and examples thereof include: cooling by leaving the molten metal to stand; cooling with the use of an air blower, a cold air blower, or the like; and cooling by putting the molten metal into a liquid such as water.

At the time of the cooling, for example, in the case of producing the floating seal material in the shape of the floating seal ring described below in the section of <Floating Seal Device>, it is preferred to use a die configured such that sliding surfaces 5 and 10 each serving as a seal surface (see FIG. 1) are forcibly and preferentially cooled at a higher cooling rate than other parts, and to cool the positions of the sliding surfaces preferentially over other parts. Examples of a method of forcibly and preferentially cooling the positions of the sliding surfaces in the above-described die include: a method of performing the cooling by pouring a refrigerant to the vicinity of the sliding surfaces; and a method of arranging the die such that the positions of the sliding surfaces are preferentially cooled in a casting method such as centrifugal casting. By using such a die and forcibly and preferentially cooling the sliding surfaces 5 and 10 at a higher cooling rate than other parts, a fine structure can be formed on the sliding surfaces of the floating seal ring. This fine structure is the same as the fine structure described above in the section of <Configuration of Floating Seal Material>.

A cooling rate of the die into which the molten metal is cast (preferably the material in the die, more preferably the sliding surfaces 5 and 10 in the mode of FIG. 1) is not particularly limited, and it is preferably 300°C/min or higher, more preferably 500°C/min or higher, but preferably 700°C/min or lower. Since an excessively low cooling rate or an excessively high cooling rate tends to make the above-described fine structure unlikely to be formed, the cooling rate is preferably in the above-described range.

In the mode of FIG. 1, it is important that the fine structure be formed on the sliding surfaces 5 and 10 under the above-described cooling conditions; therefore, the cooling under the above-described conditions may be performed to about 400 to 500°C, which is a temperature at which the fine structure is formed. In other words, the cooling conditions after the formation of the fine structure on the sliding surfaces 5 and 10 are not particularly limited, and may be determined as appropriate. Further, by forming the fine structure, in which dendritic cementite and fine carbides mainly composed of Cr are dispersed, on the sliding surfaces under the above-described cooling conditions, the strength and the hardness of cast iron can be improved. Particularly, since fine cementite and fine carbides mainly composed of Cr are formed, for example, abrasive wear caused by detachment of coarse cementite and brittle structure that are observed in, for example, white pig iron, can be effectively inhibited.

As for the cooling rate at which the molten metal is cooled and solidified, when the cooling rate (°C/min) at the positions of the sliding surfaces of the floating seal material illustrated in FIG. 1 is defined as C_{R}1 while the cooling rate (°C/min) of other parts is defined as C_{R}2, the C_{R}1 and the C_{R}2 may have a relationship of preferably 1 ≤ C_{R}1/C_{R}2 ≤ 2.5, more preferably 1 ≤ C_{R}1/C_{R}2 ≤ 2.0, still more preferably 1 < C_{R}1/C_{R}2 ≤ 2.0.

### <Floating Seal Device>

The floating seal device according to yet another embodiment of the present invention (hereinafter, also simply referred to as "floating seal device") is a floating seal device including (having) the above-described floating seal material, particularly floating seal ring. A mode of the floating seal device is not particularly limited, and one example thereof is a floating seal device which includes: an annular fixed-side housing that is fixed to a fixed axis; an annular rotating-side housing that concentrically rotates with respect to the fixed axis; and a pair of floating seal rings that are arranged with an annular gap from the fixed axis on the inner side of the fixed-side housing and the rotating-side housing, and slide with each other (hereinafter, the floating seal ring arranged on the fixed housing side and the floating seal ring arranged on the rotating-side housing side are also referred to as "fixed-side floating seal ring" and "rotating-side floating seal ring", respectively), and in which at least one of the pair of the floating seal rings is the above-described floating seal material, particularly floating seal ring.

The configuration of the above-exemplified floating seal device will now be described referring to FIG. 1. It is noted here, however, that the floating seal device according to the present embodiment is not limited to this configuration.

The floating seal device illustrated in FIG. 1 includes a pair of a fixed-side floating seal ring 2 and a rotating-side floating seal ring 7, and these floating seal rings are each arranged on the outer circumference of a shaft 20 in the state of not contacting the shaft 20, i.e., in the state of floating from the shaft 20.

The fixed-side floating seal ring 2 is combined with a fixed housing 12 via an O-ring 18, while the rotating-side floating seal ring 7 is combined with a rotary housing 15 via an O-ring 19.

The fixed-side floating seal ring 2 has an annular structure having an inner diameter larger than the outer diameter of the shaft 20, and a groove 3 of a prescribed depth is provided on the outer circumferential surface. The bottom surface of this groove 3 is formed with a tapered surface 4 which gradually approaches the shaft 20 with increasing distance from the rotating-side floating seal ring 7.

Similarly, the rotating-side floating seal ring 7 has an annular structure having an inner diameter larger than the outer diameter of the shaft 20, and a groove 8 of a prescribed depth is provided on the outer circumferential surface, which groove 8 is formed with a tapered surface 9.

The fixed-side floating seal ring 2 and the rotating-side floating seal ring 7 have a sliding surface 5 and a sliding surface 10, respectively, on outer circumferential parts of their opposing surfaces, and these floating seal rings face each other via the sliding surface 5 and the sliding surface 10.

Further, on the surface of the fixed-side floating seal ring 2 that faces the rotating-side floating seal ring 7, an inner circumferential part continuous to the sliding surface 5 is formed with a tapered surface 6 which gradually gets apart from a rotating floating sheet with decreasing distance from the shaft 20.

Similarly, on the surface of the rotating-side floating seal ring 7 that faces the fixed-side floating seal ring 2, an inner circumferential part continuous to the sliding surface 10 is formed with a tapered surface 11.

The fixed housing 12 is fixed to one end portion of the shaft 20, and its inner circumferential surface surrounds the outer circumferential surface of the fixed-side floating seal ring 2. A groove 13 of a prescribed depth is provided on the inner circumferential surface of the fixed housing 12, and this groove 13 is formed with a tapered surface 14 which is inclined in the same direction as the bottom surface of the groove 3 on the outer circumferential surface of the fixed-side floating seal ring 2.

The rotary housing 15 is provided on the other end portion of the shaft 20 in a freely rotatable manner via a bearing (not illustrated), and its inner circumferential surface surrounds the outer circumferential surface of the rotating-side floating seal ring 7. On the inner circumferential surface of the rotary housing 15, a groove 16 of a prescribed depth is provided over the entire circumference, and this groove 16 is formed with a tapered surface 17 which is inclined in the same direction as the bottom surface of the groove 8 on the outer circumferential surface of the rotating-side floating seal ring 7.

The fixed-side floating seal ring 2 and the fixed housing 12, and the rotating-side floating seal ring 7 and the rotary housing 15 are combined with each other via the O-ring 18 and the O-ring 19, respectively, and these O-rings 18 and 19 are formed of a material having an elastic force. The fixed-side floating seal ring 2 and the rotating-side floating seal ring 7 are configured such that they are press-contacted with each other via the sliding surfaces 5 and 10 by the elastic force of the O-rings 18 and 19, and a seal is made between the sliding surfaces 5 and 10 regardless of whether the rotary housing 15 is or is not rotating.

A floating seal device 1 which includes the above-described fixed-side floating seal ring 2 and rotating-side floating seal ring 7 can be suitably used as, for example, a seal for a track roller of a construction machine, a vehicle, or the like.

In the measurement of properties in the present specification, unless otherwise specified, a measurement sample is maintained for at least 48 hours under the same environment as the measurement environment prior to the measurement. In addition, unless otherwise specified, the measurement temperature, the measurement humidity, and the measurement pressure are set at normal temperature (22 ± 2°C), normal humidity (60 ± 5%RH), and normal pressure (atmospheric pressure), respectively.

### EXAMPLES

The present invention will now be described more concretely by way of Examples. It is noted here, however, that the present invention should not be interpreted as being limited to the below-described Examples by any means.

### [Production of Floating Seal Materials]

First, raw materials were prepared in accordance with the respective component compositions shown in Table 1, and these raw materials were heat-treated (heat-melted) at a temperature of 1,560°C to obtain molten metals. Subsequently, the thus obtained molten metals were each centrifugally cast and cooled at a cooling rate of 300 to 700°C/min, whereby floating seal materials of Examples 1 to 7 and Comparative Examples 1 to 16 were produced. In these floating seal materials, those components other than the ones shown in Table 1 consisted of Fe and unavoidable impurities (P, S, and the like, which were all contained in an amount of less than 0.1% by weight).
above-mentioned

### [Moldability]

For each of the above-obtained floating seal materials, the moldability was evaluated as "A" when it was possible to mold the floating seal material into a seal shape, or "B" when the floating seal material could not be molded, or could be molded but was difficult to use as a seal material due to cracking or the like. The evaluation results are shown in Table 1.

### [Hardness]

For each of the above-obtained floating seal materials, the Rockwell hardness was measured and evaluated as "A" when the floating seal material had a Rockwell hardness of 65 HRC or more, which is the desired hardness, or "B" when the floating seal material had a Rockwell hardness of less than 65 HRC. The evaluation results are shown in Table 1.

### [Seizure Resistance]

For each of the above-obtained floating seal materials, a fixed test piece having a ϕ73 seal size and shape and a rotary test piece having the same shape were prepared, and the floating seal device illustrated in FIG. 1 was produced to evaluate the seizure resistance. The fixed test piece and the rotary test piece correspond to the fixed-side floating seal ring and the rotating-side floating seal ring in FIG. 1, respectively.

As the test atmosphere, a lubricating oil was used on the inner circumferential side of the fixed test piece and the rotary test piece, and the air was used on the outer circumferential side.

The rotary test piece was rotated at a rotation speed of 1 to 5 m/s and, as a result thereof, the seizure resistance was evaluated as "A" when seizure (a rapid increase in torque and a rapid increase in temperature) did not occur, or "B" when seizure occurred. The evaluation results are shown in Table 1.

### [Evaluation of Carbides]

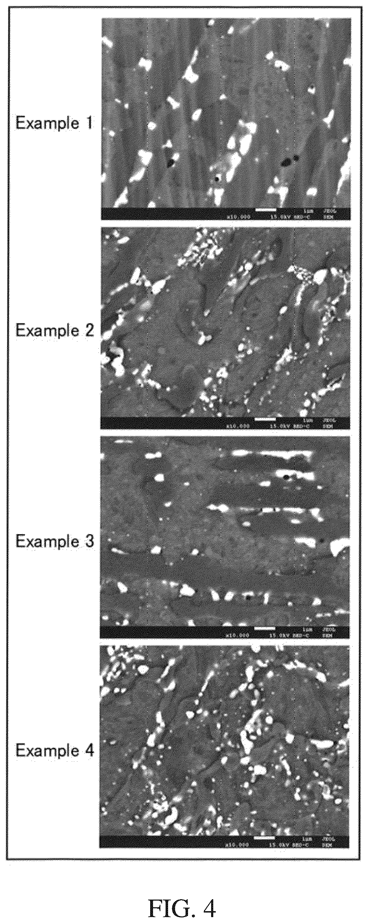

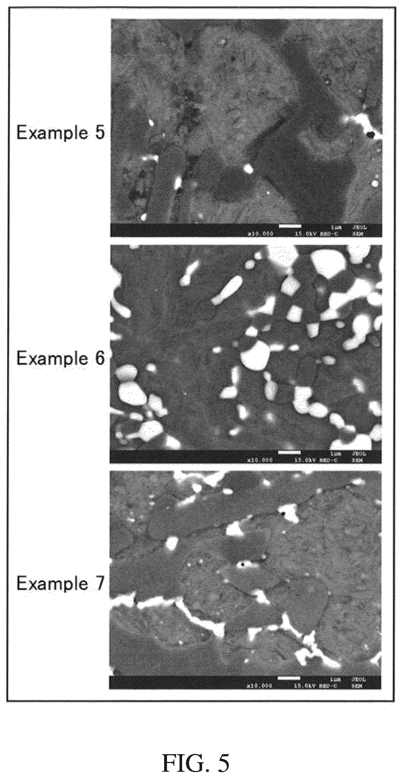

Using each of the floating seal materials of Examples 1 to 7, the above-described emission spectrometry and structure observation (structure observation under a scanning electron microscope (SEM)) were performed. The results of the SEM structure observation are shown in FIGs. 4 and 5. By the emission spectrometry and the structure observation, the formation of particulate carbides was confirmed. Specifically, it was confirmed that a carbide represented by at least one selected from the group consisting of M₃C and M₇C₃ (wherein, M represents Fe, Si, Mn, Cr, or Mo) composed of at least a portion of Fe, Si, Mn, Cr, or Mo, and at least a portion of C, as well as a carbide represented by M₆C (wherein, M represents Fe, Si, Cr, or Mo) composed of at least a portion of Fe, Si, Cr, or Mo, and at least a portion of C were formed. In addition, it was confirmed that the floating seal materials each had a phase-separated structure containing at least one dispersed phase in a matrix phase, and that the dispersed phase contained a particulate phase having an average particle size of 1 µm or less which was formed of at least one of M₃C, M₇C₃, and M₆C. Specifically, as shown in Table 2, the presence of three kinds of carbide phases and a matrix was confirmed. In Table 2, "fine phase" refers to the particulate phase having an average particle size of 1 µm or less. It is noted here that, in some of Examples, the phase 1 also satisfied the condition of having an average particle size of 1 µm or less. In Example 5, the phase 2 and the phase 3 were both M₃C, and this indicates the presence of two kinds of M₃C having different compositions. The present inventors presume that M₇C₃ was absent in Example 5 due to the small amount of Cr.

**[Table 1]**

| | Element [% by weight] | | | | | | | | Moldability | Hardness | | Seizure resistance |
|---|---|---|---|---|---|---|---|---|---|---|---|---|
| | C | Si | Mn | Cr | Mo | Ni | V | W | [-] | [HRC] | [-] | [-] |
| Example 1 | 3.34 | 2.15 | 1.06 | 8.25 | 5.18 | - | - | - | A | 69.1 | A | A |
| Example 2 | 3.26 | 2.14 | 1.06 | 9.29 | 5.18 | - | - | - | A | 69.2 | A | A |
| Example 3 | 3.24 | 2.17 | 1.01 | 8.22 | 5.24 | - | - | - | A | 69.8 | A | A |
| Example 4 | 3.22 | 2.17 | 1.03 | 8.20 | 6.24 | - | - | - | A | 69.5 | A | A |
| Example 5 | 3.05 | 0.83 | 0.39 | 5.16 | 2.02 | - | 0.69 | - | A | 65.0 | A | A |
| Example 6 | 2.91 | 1.97 | 1.01 | 8.30 | 14.90 | - | - | - | A | 70.2 | A | A |
| Example 7 | 3.27 | 2.01 | 1.10 | 8.88 | 5.44 | - | 0.85 | - | A | 68.8 | A | A |
| Comparative Example 1 | 3.41 | 2.14 | 1.08 | 2.16 | 5.16 | - | - | - | A | 58.3 | B | B |
| Comparative Example 2 | 3.07 | 0.77 | 0.34 | 17.05 | 5.10 | - | - | - | B | 68.7 | A | A |
| Comparative Example 3 | 3.31 | 2.17 | 1.03 | 8.22 | 0.70 | - | - | - | B | 63.0 | B | B |
| Comparative Example 4 | 2.20 | 2.11 | 1.02 | 8.29 | 5.10 | - | - | - | B | 68.9 | A | A |
| Comparative Example 5 | 3.93 | 2.17 | 1.03 | 8.23 | 5.20 | - | - | - | B | 69.0 | A | A |
| Comparative Example 6 | 3.03 | 0.50 | 1.01 | 8.22 | 5.02 | - | - | - | B | 68.7 | A | A |
| Comparative Example 7 | 3.10 | 2.60 | 0.96 | 8.02 | 5.37 | - | - | - | B | 64.0 | B | B |
| Comparative Example 8 | 3.11 | 2.10 | 0.10 | 8.11 | 5.01 | - | - | - | B | 64.0 | B | B |
| Comparative Example 9 | 3.20 | 2.12 | 4.00 | 8.20 | 5.05 | - | - | - | A | 68.0 | B | B |
| Comparative Example 10 | 3.07 | 0.77 | 0.34 | 17.05 | 2.15 | - | 0.61 | - | B | 66.5 | A | A |
| Comparative Example 11 | 3.89 | 1.04 | 0.63 | 15.85 | 1.92 | - | 0.45 | - | B | 66.3 | A | A |
| Comparative Example 12 | 3.21 | 2.21 | 1.01 | 9.19 | 2.34 | 4.17 | 1.14 | - | A | 63.7 | B | B |
| Comparative Example 13 | 3.34 | 2.23 | 1.28 | 8.26 | 5.36 | 4.47 | 0.87 | - | A | 63.4 | B | B |
| Comparative Example 14 | 3.40 | 2.20 | 1.00 | 2.00 | - | 4.40 | - | - | A | 58.0 | B | B |
| Comparative Example 15 | 3.40 | 2.20 | 1.00 | 5.00 | - | 4.40 | - | - | A | 58.0 | B | B |
| Comparative Example 16 | 3.40 | 2.20 | 1.00 | 4.00 | 5.00 | - | 2.00 | 6.00 | A | 58.0 | B | B |

**[Table 2]**

| | Phase 1 | Phase 2 | Phase 3 (fine phase) | Matrix |
|---|---|---|---|---|
| Example 1 | M₆C | M₃C | M₇C₃ | martensite |
| Example 2 | M₆C | M₇C₃ | M₇C₃, M₃C | martensite |
| Example 3 | M₆C | M₃C | M₇C₃ | martensite |
| Example 4 | M₆C | M₇C₃ | M₇C₃, M₃C | martensite |
| Example 5 | M₆C | M₃C | M₃C | martensite |
| Example 6 | M₆C | M₇C₃ | M₇C₃, M₃C | martensite |
| Example 7 | M₆C | M₃C | M₇C₃ | martensite |

From Table 1, it was found that the floating seal materials equivalent to the floating seal material of the present embodiment were excellent in all of moldability, hardness, and seizure resistance.

From Comparative Examples 4, 5, and 11, it was found that an excessively low content of C resulted in poor moldability, and that an excessively high content of C also resulted in poor moldability.

From Comparative Examples 6 and 7, it was found that an excessively low content of Si resulted in poor moldability, and that an excessively high content of Si resulted in poor moldability, hardness, and seizure resistance.

From Comparative Examples 8 and 9, it was found that an excessively low content of Mn resulted in poor moldability, hardness, and seizure resistance, and that an excessively high content of Mn resulted in poor moldability and seizure resistance.

From Comparative Examples 1 and 2, it was found that an excessively low content of Cr resulted in poor hardness and seizure resistance, and that an excessively high content of Cr resulted in poor moldability.

From Comparative Example 3, it was found that an excessively low content of Mo resulted in poor moldability, hardness, and seizure resistance.

From Comparative Examples 7 and 10 to 16, it was found that, with regard to the content of each component other than Fe, C, Si, Mn, Cr, and Mo, excellent moldability, hardness, and seizure resistance were obtained when the content was 1% by weight or less; however, at least one of these properties was poor when the content exceeded 1% by weight.

### DESCRIPTION OF SYMBOLS

1: floating seal device
2: fixed-side floating seal ring
3, 8, 13, 16: groove
4, 6, 9, 11, 14, 17: tapered surface
5, 10: sliding surface
7: rotating-side floating seal ring
12: fixed housing
15: rotary housing
18, 19: O-ring
20: shaft

## Claims

1. A floating seal material, comprising at least Fe, C, Si, Mn, Cr, and Mo,
wherein the content of C is 2.3% by weight or more and 3.8% by weight or less, the content of Si is 0.7% by weight or more and 2.5% by weight or less, the content of Mn is 0.3% by weight or more and 1.3% by weight or less, the content of Cr is 3% by weight or more and 13% by weight or less, the content of Mo is 1.8% by weight or more and 15% by weight or less, and the remainder is made up of Fe and unavoidable impurities.

2. The floating seal material according to claim 1, comprising at least one of carbides represented by M₃C and M₇C₃ (wherein, M represents Fe, Si, Mn, Cr, or Mo) that are composed of at least a portion of the Fe, Si, Mn, Cr, or Mo, and at least a portion of the C.

3. The floating seal material according to claim 1 or 2, comprising a carbide represented by M₆C (wherein, M represents Fe, Si, Cr, or Mo) that is composed of at least a portion of the Fe, Si, Cr, or Mo, and at least a portion of the C.

4. The floating seal material according to claim 2 or 3, having a phase-separated structure comprising at least one dispersed phase in a matrix phase,
wherein the dispersed phase comprises a particulate phase that is formed of at least one of the carbides represented by M₃C, M₇C₃, and M₆C, and has an average particle size of 1 µm or less.

5. A floating seal device, comprising the floating seal material according to any one of claims 1 to 4.

6. A method of producing a floating seal material, the method comprising:
the molten metal preparation step of preparing a molten metal comprising at least Fe, C, Si, Mn, Cr, and Mo, in which the content of C is 2.3% by weight or more and 3.8% by weight or less, the content of Si is 0.7% by weight or more and 2.5% by weight or less, the content of Mn is 0.3% by weight or more and 1.3% by weight or less, the content of Cr is 3% by weight or more and 13% by weight or less, the content of Mo is 1.8% by weight or more and 15% by weight or less, and the remainder is made up of Fe and unavoidable impurities; and
the casting step of casting the molten metal into a die.

7. The method of producing a floating seal material according to claim 6, wherein, in the casting step, the molten metal is cast into the die by a centrifugal casting method.

8. The method of producing a floating seal material according to claim 6 or 7, comprising the step of cooling the die to cool and solidify the molten metal after the casting step.
